(19) Europäisches Patentamt
European Patent Office
Office européen des brevets

(11) **EP 2 477 349 A2**

(12) **EUROPEAN PATENT APPLICATION**
published in accordance with Art. 153(4) EPC

(43) Date of publication:
**18.07.2012 Bulletin 2012/29**

(51) Int Cl.:
*H04J 11/00* (2006.01)      *H04L 29/02* (2006.01)

(21) Application number: **10815609.2**

(22) Date of filing: **09.09.2010**

(86) International application number:
**PCT/KR2010/006120**

(87) International publication number:
**WO 2011/031064 (17.03.2011 Gazette 2011/11)**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority:  **09.09.2009   KR 20090085116**

(71) Applicant: **Pantech Co., Ltd.**
**Seoul 121-270 (KR)**

(72) Inventors:
• **YOON, Sungjun**
  **Seoul 133-112 (KR)**

• **KIM, Kitae**
  **Suwon-si**
  **Gyeonggi-do 442-190 (KR)**
• **SUH, Sungjin**
  **Seoul 137-070 (KR)**

(74) Representative: **Jordan, Volker Otto Wilhelm et al**
  **Weickmann & Weickmann**
  **Patentanwälte**
  **Postfach 860 820**
  **81635 München (DE)**

(54)    **METHOD AND APPARATUS FOR TRANSCEIVING A SIGNAL IN A COMMUNICATION SYSTEM**

(57)    The present invention relates to a method for measuring the position of user equipment through a reference signal, or pilot, in an orthogonal frequency division multiplexing-based wireless mobile communication system. The present invention relates to a method for transmitting a cell-specific positioning reference signal (PRS) pattern which is a signal pattern used in transceiving between the user equipment and a base station.

*FIG.5*

|  | EVEN SUBFRAME | ODD SUBFRAME |
|---|---|---|
| M_PATTERN=0 | MUTE | MUTE |
| M_PATTERN=1 | TRANSMIT | MUTE |
| M_PATTERN=2 | MUTE | TRANSMIT |
| M_PATTERN=3 | TRANSMIT | TRANSMIT |

<GENERAL CASE>

| | SUBFRAME 0 | SUBFRAME 1 | SUBFRAME 2 | SUBFRAME 3 | SUBFRAME 4 | SUBFRAME 5 |
|---|---|---|---|---|---|---|
| M_PATTERN=0 | MUTE | MUTE | MUTE | MUTE | MUTE | MUTE |
| M_PATTERN=1 | TRANSMIT | MUTE | TRANSMIT | MUTE | TRANSMIT | MUTE |
| M_PATTERN=2 | MUTE | TRANSMIT | MUTE | TRANSMIT | MUTE | TRANSMIT |

<N=2 OR 4 OR 6>

EP 2 477 349 A2

**Description**

**Technical Field**

The present invention relates to a method and an apparatus for transmitting and receiving a signal between a user equipment and a base station in a wireless communication system. More particularly, the present invention relates to a method and an apparatus for transmitting and receiving a signal pattern used in the process of transmission and reception.

**Background Art**

Positioning methods for providing various location services in WCDMA (Wideband Code Division Multiple Access) and location information required for communication, are mainly based on three methods, including 1) a cell coverage-based positioning method, 2) an OTDOA-IPDL (Observed Time Difference of Arrival-Idle Period Downlink) method, and 3) a network-assisted GPS method. The three methods are complementary to each other rather than competitive with each other, and are appropriately used for different purposes, respectively.

Among the three methods, the OTDOA (Observed Time Difference of Arrival) method is based on shift-measuring of the relative arrival time of Reference Signals (RSs) or pilots from different base stations or cells. In order to calculate a location, a User Equipment (UE) or a Mobile Station (MS) must receive a relevant reference signal from each of at least three different base stations or cells. In order to facilitate the measurement of a location and avoid near-far problems in the OTDOA method, the WCDMA standards includes Idle Periods in Downlink (IPDL). During this Idle period, the user equipment or the mobile station must be able to receive a reference signal or a pilot from a neighbor cell although a reference signal or a pilot from a cell (i.e. a serving cell) where the user equipment is currently located at an identical frequency is strong.

An LTE (Long Term Evolution) system which has evolved from WCDMA of the 3GPP series, is based on OFDM (Orthogonal Frequency Division Multiplexing) differently from an asynchronous CDMA (Code Division Multiple Access) scheme of WCDMA. Now, it is considered that positioning is performed based on the OTDOA method in a new LTE system in such a manner that positioning is performed by using the OTDOA method in the WCDMA, as described above. To this end, consideration is being given to a scheme of first leaving blank a data region corresponding to the remaining resource allocation region excluding a control region for an existing reference signal and a control channel and then transmitting a reference signal for positioning through the region, which is left blank, on a predetermined cycle in the structure of one of an MBSFN (Multicast Broadcast Single Frequency Network) subframe and a normal subframe or in the structure of each of both subframes. Namely, in order to perform positioning in the LTE corresponding to a new and OFDM-based next-generation communication scheme, positioning is based on the OTDOA method in the existing WCDMA, but reconsideration must be given to a method of transmitting a reference signal for positioning and the construction of a reference signal in a new structure for resource allocation, due to a change in communication bases, such as a multiplexing scheme and an access scheme. Also, a more accurate positioning method is required by the development of communication systems, including an increase in the moving speed of a user equipment, a change in an interference environment between base stations and an increase in the complexity of the communication environment.

**Disclosure**

**Technical Problem**

Therefore, the present invention has been made in view of the above-mentioned problems, and the present invention provides a method for constructing a Reference Signal for Positioning (PRS) and performing transmission and reception in the measurement of the location of a user equipment in a wireless mobile communication system.

The present invention also provides a method in which a reference signal is identically and simply constructed in all transmission methods, which can be considered, while reducing, to a minimum, interference between reference signals, which are transmitted by base stations, respectively, and the reference signal is transmitted and received without requiring additional assistance data from a higher layer or by using only a minimum amount of assistance data.

**Technical solution**

In order to accomplish the above-mentioned objects, in accordance with an aspect of the present invention, in an OFDM-based wireless communication system, in which at least one base station and at least one User Equipment (UE) are included, each of the at least one base station and the at least one user equipment includes at least one antenna, a reference signal whose resource blocks include at least one symbol on a predetermined cycle is transmitted and received, and each of the resource blocks includes multiple OFDM symbols corresponding to a time slot within multiple OFDM subcarriers and subframes,

there is provided a method and an apparatus for transmitting and receiving a reference signal, in which in transmitting reference signals in at least one subframe during the predetermined cycle, some of the base stations mute all subframes allocated for transmitting reference signals during the predetermined cycle without transmitting reference signals therein, and the remaining base stations of the base stations, which are divided into multiple groups, transmit positioning reference signals in a subframe specified for each group and mute the remaining subframes without transmitting positioning reference signals therein, on a subframe-by-subframe basis in all of the subframes allocated for transmitting the reference signals during the predetermined cycle.

In accordance with another aspect of the present invention, there is provided a method and an apparatus for transmitting and receiving a signal in a communication system, by which at least one of base stations mutes all N subframes allocated for transmitting reference signals during a predetermined cycle without transmitting reference signals therein, at least another of the base stations mutes an odd-numbered subframe among the N subframes allocated for transmitting the reference signals during the predetermined cycle without transmitting reference signals therein, and at least still another of the base stations mutes an even-numbered subframe among the N subframes allocated for transmitting the reference signals during the predetermined cycle without transmitting reference signals therein.

In this case, although the reference signal may be a positioning reference signal, the reference signal is not limited to the positioning reference signal, and may be another reference signal.

**Advantageous Effects**

Effects according to embodiments of the present invention are as follows.

By a method for transmitting and receiving a reference signal through a muting method according to embodiments of the present invention, it is possible to more effectively reduce interference between base stations caused by simultaneously transmitting an identical reference signal pattern by all of the base stations, and an efficient muting method can be identically and simply applied regardless of the number of subframes to be continuously used during a predetermined cycle.

Also, when each user equipment has demodulated a reference signal and measures the location of a user equipment by an OTDOA method, a reference signal can be more effectively and efficiently transmitted by providing an effective muting method which does not require additional assistance data from a higher layer or requires only a minimum amount of assistance data in order to know a muting pattern of a reference signal transmitted by each base station.

**Brief Description of the Drawings**

The foregoing and other objects, features and advantages of the present invention will become more apparent from the following detailed description when taken in conjunction with the accompanying drawings in which:

FIG. 1 is a view illustrating patterns of Positioning Reference Signals (PRSs), which a current LTE system has tentatively determined in a subframe;

FIG. 2 is a view illustrating a method for transmitting a positioning reference signal in an existing muting pattern for any N and K;

FIG. 3 is a view illustrating a method for transmitting a positioning reference signal in an existing muting pattern when N=3 and K=1, and when N=4 and K=2;

FIG. 4 is a view illustrating a method for transmitting a positioning reference signal in a new muting pattern according to an exemplary embodiment of the present invention;

FIG. 5 is a view illustrating a method for dividing each base station (cell) into three groups according to new muting patterns and simply transmitting a positioning reference signal in a new muting pattern according to an exemplary embodiment of the present invention;

FIG. 6 is a view illustrating a first embodiment of the present invention for dividing each base station (cell) into three groups according to a physical cell ID, and deploying base stations (cells) and transmitting a positioning reference signal according to a muting pattern;

FIG. 7 is a view illustrating a second embodiment of the present invention for dividing each base station (cell) into three groups according to a physical cell ID, and deploying base stations (cells) and transmitting a positioning reference signal according to a muting pattern; and

FIG. 8 is a view illustrating a third embodiment of the present invention for dividing each base station (cell) into three groups according to a physical cell ID, and deploying base stations (cells) and transmitting a positioning reference signal according to a muting pattern.

**Best Mode**

**Mode for Invention**

Hereinafter, exemplary embodiments of the present invention will be described in detail with reference to the accompanying drawings. At this time, the configuration and operation of the present invention shown and described with reference to the accompanying drawings are described as at least one embodiment, and this does not limit a technical idea and core configuration and operation of the present invention. It should be noted that in assigning reference numerals to elements in the drawings, the same elements will be designated by the same reference numerals although they are shown in different drawings. Further, in the following description of the present invention, a detailed description of known functions and configurations incorporated herein will be omitted when it may make the subject matter of the present invention rather unclear.

In addition, terms, such as first, second, A, B, (a), (b) or the like may be used herein when describing components of the present invention. Each of these terminologies is not used to define an essence, order or sequence of a corresponding component but used merely to distinguish the corresponding component from other component(s). It should be understood that if it is described in the specification that one component is "connected," "coupled" or "joined" to another component, a third component may be "connected," "coupled," and "joined" between the first and second components, although the first component may be directly connected, coupled or joined to the second component.

In an OFDM (Orthogonal Frequency Division Multiplexing)-based wireless mobile communication system, the location of a user equipment can be measured by using a reference signal or pilot for positioning by the OTDOA (Observed Time Difference of Arrival) method. In the OFDM-based wireless mobile communication system, it is possible to transmit a cell-specific Positioning Reference Signal (PRS) pattern corresponding to a signal pattern which is used to measure the location of a user equipment by using a reference signal or a pilot by the OTDOA method. In this specification, although it is described that the location of a user equipment is measured by using a positioning reference signal by the OTDOA method in the OFDM-based wireless mobile communication system, the present invention is not limited to the OFDM-based wireless mobile communication system, and may be applied to any applicable wireless mobile communication system.

First, a method for measuring a location of a user equipment by using a positioning reference signal in the OTDOA scheme tentatively determined by a current LTE system, will be described below.

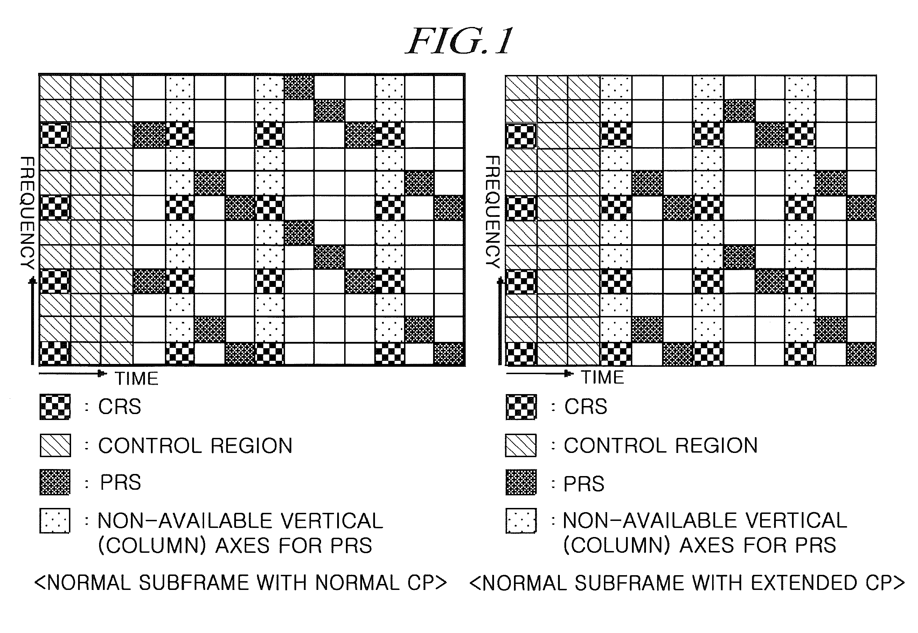

FIG. 1 illustrates patterns of Positioning Reference Signals (PRSs), which a current LTE system has tentatively determined in a subframe, when a normal CP (cyclic prefix) is added in a normal subframe and when an extended CP is added in a normal subframe, respectively. As shown in FIG. 1, a positioning reference signal pattern for a subframe and one Resource Block (RB) on the frequency axis is replicated and transmitted in an identical pattern by a system bandwidth for positioning reference signals along the frequency axis. Along the time axis, the positioning reference signal pattern is transmitted through 1, 2, 4 or 6 consecutive subframes with a particular offset on a cycle of 160 ms (160 subframes), 320 ms (320 subframes), 640 ms (640 subframes) or 1280 ms (1280 subframes). At this time, a bandwidth for positioning reference signals along the frequency axis, a cycle and an offset of subframes for transmitting positioning reference signals along the time axis, and the number of consecutive subframes for transmitting positioning reference signals along the time axis in each base station are controlled by a higher layer, and this information is transmitted to each user equipment by an RRC (Radio Resource Controller).

At this time, when positioning reference signal patterns are cyclically shifted along the frequency axis as shown in FIG. 1, the number of positioning reference signal patterns discriminable from each other is 6. Accordingly, base stations may be divided into a total of 6 groups according to 6 different positioning reference signal patterns, and the 6 groups may transmit positioning reference signals in different positioning reference signal patterns, respectively. However, when the base stations up to tier 2 are considered from the viewpoint of the user equipment, there are base stations corresponding to 19 cell sites or 57 cells (when base stations, from which the positioning reference signals can be actually received, are considered to be base stations up to tier 2, because positioning reference signals transmitted by base stations above tier 2 are weak when they are received by a relevant user equipment, although it goes without saying that the base stations above tier 2 transmit the positioning reference signals). Therefore, 6 positioning reference signal patterns do not enable all of the base stations up to tier 2 to transmit positioning reference signals having different patterns, respectively, and performance degradation is caused by interference between multiple base stations occurring when the multiple base stations transmit positioning reference signals, respectively, due to the existence of the multiple base stations all having an identical positioning reference signal pattern.

In this respect, a time point of transmitting a positioning reference signal by a base station is once again discriminated from a time point of transmitting a positioning reference signal by another base station, on a subframe-by-subframe basis, so as to further discriminate between base stations which transmit positioning reference signals in an identical positioning reference signal pattern. Therefore, it is possible to reduce performance degradation caused by interference between base stations occurring when the base stations transmit positioning reference signals, respectively.

One of the methods as described above, includes: dividing base stations, which transmit positioning reference signals, respectively, in an identical positioning reference signal pattern, into multiple groups; defining a muting pattern specified for each group; and transmitting positioning reference signals or not transmitting (muting) positioning reference signals, on a per-subframe basis according to the muting patterns among all consecutive subframes allocated during a predetermined cycle of transmitting positioning reference signals.

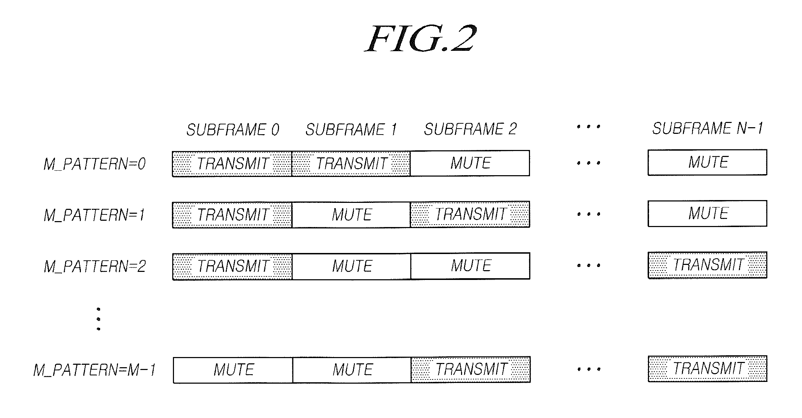

The method as described above will be described below with reference to FIG. 2. With respect to N consecutive subframes allocated in order to transmit positioning reference signals on a predetermined cycle (160 ms, 320 ms, 640 ms or 1280 ms, where one subframe corresponds to 1 ms), each base station group (or cell group) transmits positioning reference signals in a K number of subframes of the N number of subframes, and mutes the remaining (N-K) subframes without transmitting positioning reference signals therein. When each base station group transmits positioning reference signals in only the K number of subframes of the N consecutive subframes, if all consecutive subframes are considered, different patterns, the number M of which is equal to comb(N,K), are generated. Herein, comb(X,Y) represents the number of total possible combinations when Y subframes are selected from among X subframes. At this time, because comb(N,K) has a maximum value when $K = \lfloor N/2 \rfloor$ or $K = \lceil N/2 \rceil$, this value is selected as K.

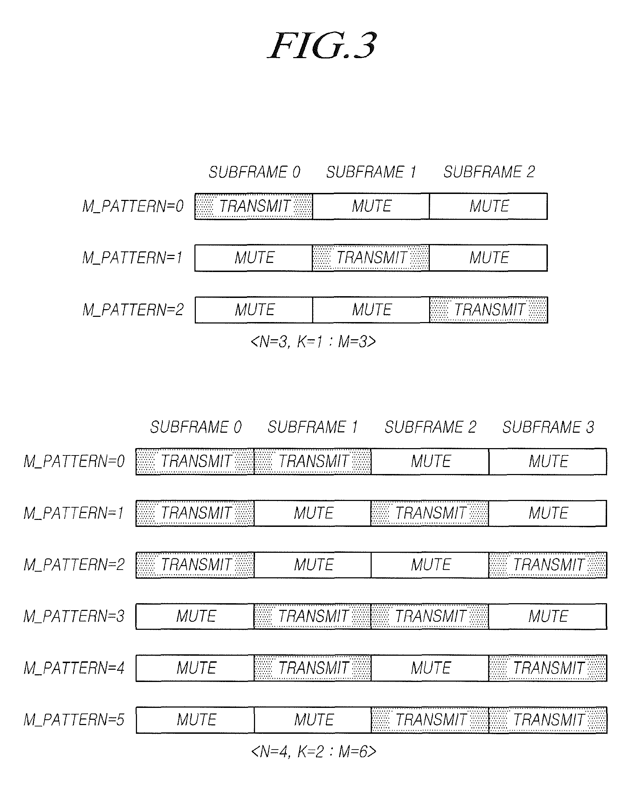

FIG. 3 is a view illustrating the transmission of a positioning reference signal using the muting pattern as in the method shown in FIG. 2 when N=3 and N=4. At this time, when N=3, K=1 or 2, and M=3. Also, when N=4, K=2, and M=6. Accordingly, when N=3, 3 muting patterns exist based on a per-subframe basis in all consecutive subframes for transmitting positioning reference signals. In this respect, in time and frequency, the number of groups, into which base stations (or cells) may be divided in the existing manner, is only 6 based on different positioning reference signal patterns. As a result, the number of groups, into which base stations (or cells) may be divided, is increased from the existing 6 to 18 which is three times as much as 6. Namely, base stations which all use an identical positioning reference signal pattern, may be further divided into 3 cases according to the muting patterns, so that it is possible to further reduce interference between the base stations caused by positioning reference signals transmitted by the base stations, respectively. Similarly, when N=4, 6 muting patterns exist based on a per-subframe basis in all consecutive subframes for transmitting positioning reference signals. Therefore, the number of groups, into which base stations (or cells) may be divided, is increased from the existing 6 to 36 which is six times as much as 6. Namely, base stations which all use an identical positioning reference signal pattern, may be further divided into 6 cases according to the muting patterns based on a per-subframe basis in all consecutive subframes for transmitting positioning reference signals. However, as shown in FIG. 3, based on a per-subframe basis in subframes for transmitting positioning reference signals, (1/2) base stations corresponding to K/N base stations of all of the base stations which use an identical positioning reference signal pattern, transmit positioning reference signals, respectively, and the remaining (1/2) base stations corresponding to (1—K/N) base stations thereof all perform muting without transmitting positioning reference signals. Accordingly, base stations which all use an identical positioning reference signal pattern, may be further divided into only two cases corresponding to N/K. Accordingly, there actually exist muting patterns, the number of which is equal to M=comb(N,K). However, a further orthogonal discrimination may not be made between base stations (or cells), which all use an identical positioning reference signal pattern in the existing manner, by the number of these muting patterns, but a further discrimination may be made therebetween only by N/K on a subframe-by-subframe basis. Therefore, it is possible to reduce interference between base stations occurring when the base stations transmit positioning reference signals, respectively.

Also, the number of consecutive subframes, which has tentatively been determined by the current LTE system, is equal to 1, 2, 4 or 6. When the method for forming a muting pattern is substituted in each of these cases for N=2, 4 or 6, different muting patterns are formed according to the value of N, and the configuration of a subframe for positioning reference signals must be periodically changed according to the value of N, and thus complexity increases. Also, in each of the cases of N=2, 4 and 6, each user equipment must store muting patterns, the number of which is equal to M=comb(N,K), in a memory, and must perform different demodulations according to N, which is the number of consecutive subframes, and an M number of muting patterns of each base station (cell). Therefore, complexity also increases. Moreover, in common cell (or base station) deployment conditions, in order to perform efficient demodulation by each user equipment, each base station (eNB or cell) must transmit the M number of muting patterns as additional assistance data to each user equipment for each value of N, so as to cause additional complexity. At this time, the additional assistance data may be included in a control-related functional component, which the base station (eNB) transmits to the user equipment, and then the control-related functional component including the additional assistance data may be transmitted. Otherwise, the additional assistance data may be included in an L3 signaling message such as an RRC, and then the L3 signaling message including the additional assistance data may be transmitted. Otherwise, the additional assistance data may be transmitted in an L2 control scheme such as Medium Access Control (MAC). At this time, the length of assistance data is equal to $\lceil \log_2 M \rceil$, and the number of bits is equal to 5 when 6 subframes are used.

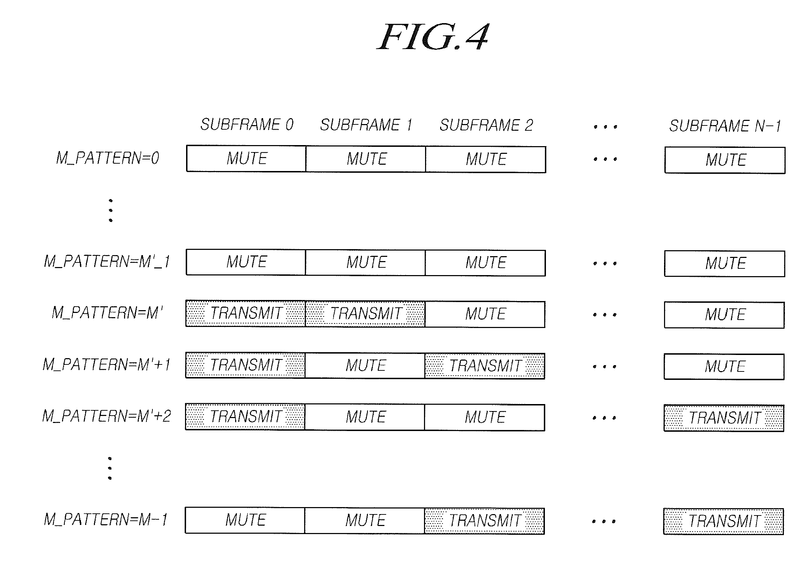

FIG. 4 is a view illustrating a method for transmitting a positioning reference signal by using a new muting pattern for overcoming the disadvantages as described above. Referring to FIG. 4, the above method includes: dividing all base stations (eNBs or cells) into an M number of groups; muting a total N number of subframes allocated for transmitting positioning reference signals during a predetermined cycle without transmitting positioning reference signals in the total N number of subframes (or transmitting positioning reference signals with zero power), by an M' number of groups corresponding to some of all of the base stations among the M number of groups; dividing the remaining base stations into an (M—M') number of groups; and transmitting positioning reference signals in a K number of subframes specified for each group and muting a remaining (N-K) number of subframes without transmitting positioning reference signals in the remaining (N-K) number of subframes, on a subframe-by-subframe basis in the total N number of subframes allocated for transmitting the positioning reference signals during the predetermined cycle. At this time, a muting pattern specified for each group in the (M—M') number of groups may be identical to or different from the muting pattern formed by the method as shown in FIG. 2 or FIG. 3. In this case, because the M' number of groups among the total M number of base station groups (eNB groups or cell groups) do not transmit positioning reference signals, there is a further reduction in the number of base stations, which simultaneously transmit positioning reference signals in an identical positioning reference signal pattern and in an identical muting pattern, even on a per-actual subframe basis (or there is an increase in the number of base stations which may be additionally divided according to the muting patterns, even on a subframe-by-subframe basis). Therefore, interference between base stations caused by positioning reference signals transmitted by the base stations, respectively, can be more greatly reduced than with existing muting methods.

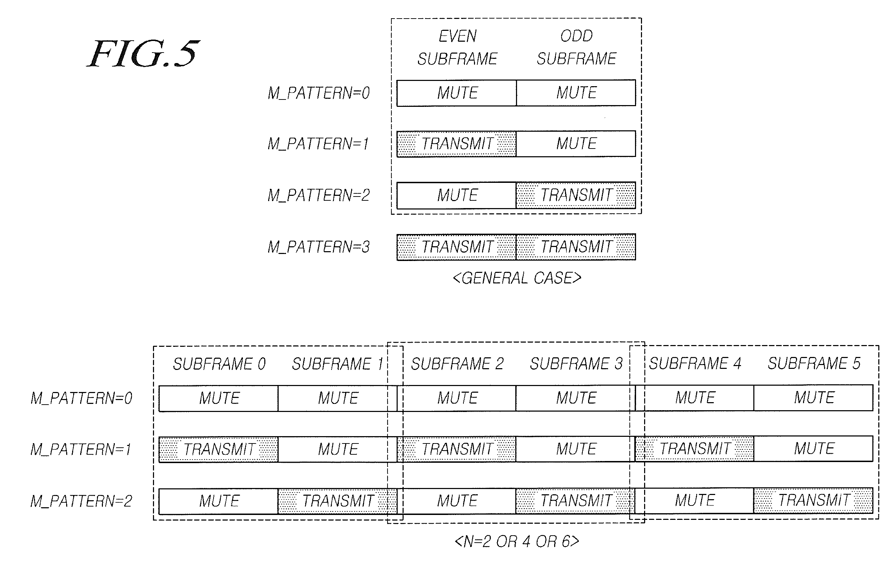

Moreover, when muting patterns as shown in FIG. 5 are constructed as a special case of the new muting patterns shown in FIG. 4, together with the above advantage such that interference between base stations caused by positioning reference signals transmitted by the base stations, respectively, can be more greatly reduced even on a per-actual subframe basis than with the existing muting methods, the present invention can have additional advantages which enable overcoming of other disadvantages of the existing muting methods as described above.

First, a method for transmitting a positioning reference signal according to the present invention will be described below with reference to new muting patterns as shown in FIG. 5. First, muting patterns are simply constructed as in four major cases shown in FIG. 5. If each muting pattern is represented by M_pattern, when m_pattern=0, all subframes allocated for transmitting positioning reference signals during a predetermined cycle are muted without transmitting positioning reference signals in all of the subframes (or with the positioning reference signals transmitted with zero power). When M_pattern=1, positioning reference signals are transmitted in an even-numbered subframe, and an odd-numbered subframe is muted without transmitting positioning reference signals therein (or with the positioning reference signals transmitted with zero power). On the contrary, when M_pattern=2, positioning reference signals are transmitted in an odd-numbered subframe, and an even-numbered subframe is muted without transmitting positioning reference signals therein (or with the positioning reference signals transmitted with zero power). When M_pattern=3, positioning reference signals are transmitted in all of the subframes allocated for transmitting the positioning reference signals during the predetermined cycle. Namely, when M_pattern=3, in the case of not using a muting pattern, the number of subframes allocated for transmitting positioning reference signals during a predetermined cycle is particularly equal to 1. The parameter M_pattern as defined above and the values of M_pattern are only an expression of a parameter, which muting patterns may have, and only an expression of values of the parameter, respectively, when the muting patterns are simply constructed as in the four major cases shown in FIG. 5. In this respect, the parameter M_pattern and the values thereof are not interpreted as being fixed. Therefore, it is obvious that the muting patterns may be differently expressed in any way by a parameter and values thereof which may have one-to-one correspondence with the cases of the four muting patterns as shown in FIG. 5.

A method for transmitting a positioning reference signal according to the present invention, which is specifically constructed in the case of N=2, 4 or 6, which is the number of all of the subframes allocated for transmitting the positioning reference signals during the predetermined cycle, in the muting patterns simply constructed in the general case as described above, is as shown in a view at the lower end of FIG. 5. As shown in FIG. 5, all of the base stations (or cells) are divided into three groups, and one group of the three groups mutes all of the subframes allocated for transmitting the positioning reference signals during the predetermined cycle without transmitting positioning reference signals therein (or transmits the positioning reference signals with zero power). In the remaining two groups, one group transmits positioning reference signals in an even-numbered subframe, and mutes an odd-numbered subframe without transmitting positioning reference signals therein (or transmits the positioning reference signals with zero power). On the contrary, the other group transmits positioning reference signals in an odd-numbered subframe, and mutes an even-numbered subframe without transmitting positioning reference signals therein (or transmits the positioning reference signals with zero power). These muting patterns may be simply constructed when N=2 which is the number of the subframes allocated for transmitting the positioning reference signals during the predetermined cycle. When N=4, muting patterns may be constructed by repeating, two times, the muting patterns constructed when N=2. When N=6, muting patterns may be constructed by repeating, three times, the muting patterns constructed when N=2.

When the new muting patterns as shown in FIG. 5 are compared with the existing muting patterns, because K/N=1/3 regardless of N=2, 4 or 6, K=N/3, and M=3. Although M which is the number of muting patterns, appears to be more reduced than the number of the existing muting patterns in the case of N=4 or 6, based on a per-subframe basis which actually affects interference when positioning reference signals are transmitted, the existing muting methods may reduce, only by K/N=1/2, the number of base stations which simultaneously transmit positioning reference signals, respectively, in an identical positioning reference signal pattern. However, the new muting method according to the present invention may reduce, by K/N=1/3, the number of base stations which simultaneously transmit positioning reference signals, respectively, in an identical positioning reference signal pattern. Therefore, the new muting method according to the present invention can even further reduce the interference occurring when positioning reference signals are transmitted.

It goes without saying that another embodiment may be constructed for K/N=1/4 or 1/5 in the general case of the new muting patterns according to the present invention as shown in FIG. 4. In this case, there is an even further reduction in the number of base stations which simultaneously transmit positioning reference signals, respectively, in an identical positioning reference signal pattern, so that the interference occurring when positioning reference signals are transmitted can be further reduced. However, there may occur a case where the user equipment fails to receive positioning reference signals from even 3 or 4 base stations (or cells) which correspond to at least base stations (or cells) required to measure the location of the user equipment by using a positioning reference signal by the OTDOA method. Particularly, the more base stations there are which mute all of the subframes allocated for transmitting the positioning reference signals during the predetermined cycle, the more such base stations there are which are deployed so as to be close to each other, the closer the location of the user equipment becomes to the center of such base stations, and the higher a probability that the user equipment fails to receive positioning reference signals from even 3 or 4 base stations (or cells). Moreover, it is difficult to implement a simple system for transmitting a positioning reference signal, in which as shown in FIG. 5, after all of the base stations are divided into three groups, one group of the three groups mutes all of the subframes allocated for transmitting the positioning reference signals during the predetermined cycle, and one group of the remaining two groups mutes an odd-numbered subframe without transmitting positioning reference signals therein (or transmits the positioning reference signals with zero power) whereas the other group thereof transmits positioning reference signals in an odd-numbered subframe, and one group transmits positioning reference signals in an even-numbered subframe whereas the other group mutes an even-numbered subframe without transmitting positioning reference signals therein (or transmits the positioning reference signals with zero power). Also, there is another disadvantage in that the simple system for transmitting a positioning reference signal must be more complicatedly constructed.

However, although it is necessary to endure the complexity of constructing and transmitting a subframe when a positioning reference signal is transmitted, in the case of always creating an environment which enables the user equipment to receive positioning reference signals from base stations, the number of which is equal to or larger than 3 or 4 which is the number of at least base stations (or cells) required to measure the location of the user equipment by using a positioning reference signal by the OTDOA method, it is obvious that an embodiment may be constructed for K/N, the value (e.g. 1/4 or 1/5) of which is smaller than those values as described above, in the case as generally shown in FIG. 4, in order to more accurately measure the location of the user equipment.

When the new muting patterns as shown in FIG. 5 are compared with the existing muting patterns, as described above, based on a per-subframe basis which actually affects interference when positioning reference signals are transmitted, the new muting method according to the present invention may even further reduce, from by K/N=1/2 to by K/N=1/3, the number of base stations which transmit positioning reference signals, respectively, in an identical positioning reference signal pattern. Therefore, the new muting method according to the present invention can even further reduce the interference occurring when positioning reference signals are transmitted. Also, it is only required to repeatedly use the muting patterns for N=2, which are identical regardless of N=2, 4 or 6 which is the number of the subframes for positioning allocated for transmitting the positioning reference signals during the predetermined cycle. Therefore, it is possible to reduce the complexity of the existing muting patterns, which is caused by the requirements such that different muting patterns are formed according to the value of N and the configuration of a subframe for positioning reference signals must be periodically changed according to the value of N.

Also, in the existing muting patterns, in each of the cases of N=2, 4 and 6, each user equipment must store muting patterns, the number of which is equal to M=comb(N,K), in a memory, and must perform different demodulations according to N, which is the number of consecutive subframes, and an M number of muting patterns of each base station (cell). Therefore, complexity also increases. In contrast, consideration must be given only to the three muting patterns in the new muting patterns according to the present invention regardless of N=2, 4 or 6, so that the above complexity can be significantly reduced. Moreover, in the case of the existing muting patterns, in common cell (or base station) deployment conditions, in order to perform efficient demodulation by each user equipment, each base station (eNB or cell) must transmit the M number of muting patterns as additional assistance data to each user equipment through L3 signaling such as an RRC for each value of N, so as to cause additional complexity. In contrast, in the case of the new muting patterns, each base station (cell) is divided into three groups according to a physical cell ID regardless of the value of N, and a muting pattern of each base station can be recognized by using physical cell IDs of a serving cell and a neighbor cell when the user equipment performs demodulation. Therefore, there is no need for additional assistance data which must be transmitted to the user equipment through L3 signaling such as an RRC. At this time, physical cell IDs of a serving cell and a neighbor cell are not additional data, in that it has already been agreed that they are assistance data to be transmitted in a forward direction.

It goes without saying that in the worst case such as a case where base stations, which mute all of the subframes allocated for transmitting the positioning reference signals during the predetermined cycle, are deployed so as to be close to each other, a higher layer needs to allocate a muting pattern to each base station in consideration of base station (cell) deployment without following a Physical Cell (or base station) ID (PCI). At this time, as additional assistance data, information on the allocation of a muting pattern to each base station may be transmitted to each user equipment in a forward direction. However, although additional assistance data is used in a case to which these new muting patterns are applied, there is an advantage in that the length of assistance data is reduced to only 2 bits whereas the length of assistance data is equal to $\lceil \log_2, M \rceil$ in the existing muting patterns. For example, when the number of the subframes allocated for transmitting the positioning reference signals during the predetermined cycle is equal to 6, in the existing muting methods, the length of additional assistance data is 5 bits. In contrast, when the new muting method according to the present invention is applied to the transmission of positioning reference signals, only 2 bits are required as the length of additional assistance data. This additional assistance data is transmitted to each of all of the user equipment and to each of all neighbor cells of each user equipment. For example, when 57 cells up to tier 2 are considered, the number of bits is reduced from $57 \times 5 = 285$ bits to $57 \times 2 = 114$ bits by 171 bits. Therefore, there is a significant reduction in overhead caused by a reduction in the number of bits.

Hereinafter, a description will be made of various and specific embodiments of the present invention, in which when the new muting method according to the present invention as shown in FIG. 5 is applied to the base stations and each base station is divided into three groups, and a positioning reference signal is transmitted in three different muting patterns(or four muting patterns in consideration of even a case of transmitting positioning reference signals in all subframes allocated for the transmitting positioning reference signals) by a method for transmitting a positioning reference signal, each base station (cell) is divided into three groups according to a physical cell ID regardless of the value of N which is the number of the subframes allocated for transmitting the positioning reference signals during the predetermined cycle, and new muting patterns are applied to the three groups. In this case, a muting pattern of each base station can be recognized by using physical cell IDs of a serving cell and a neighbor cell when the user equipment performs demodulation. Therefore, there is no need for additional assistance data which must be transmitted to the user equipment through L3 signaling such as an RRC.

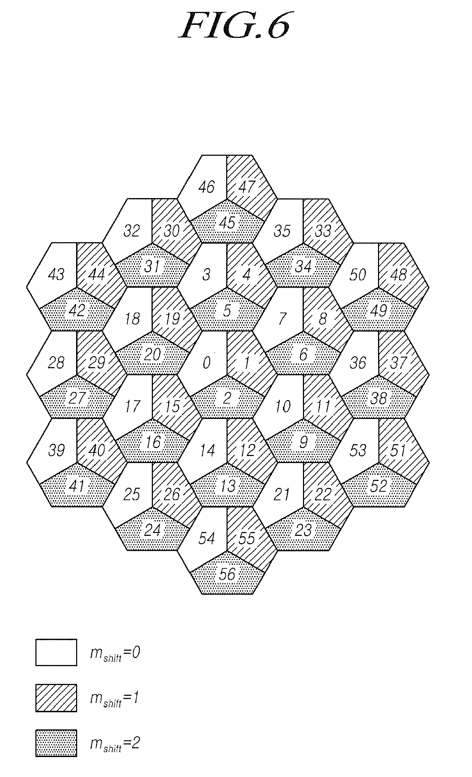

FIG. 6 is a view illustrating a first embodiment of the present invention for applying the new muting method according to the present invention as shown in FIG. 5 to the base stations, dividing each base station (cell) into three groups according to a physical cell ID, and deploying base stations (cells) according to a muting pattern. Base stations (cells) have different Positioning Reference Signal (PRS) patterns, respectively, according to $v_{shift}$, the value of which is obtained by performing modulo-6 arithmetic on a relevant Physical Cell (or base station) ID (PCI). Three different muting patterns are used to further discriminate between base stations (cells) all having an identical value of $v_{shift}$ (i.e. base stations all having an identical positioning reference signal pattern). At this time, M_pattern (or $m_{pattern}$) , the value of which expresses each of the three muting patterns, is expressed by a value obtained by again performing modulo-3 arithmetic on a PCI. However, in such a manner as to prevent, to a maximum, base stations (cells) having $m_{pattern} = 0$, which mute all of the subframes allocated for transmitting the positioning reference signals during the predetermined cycle, from being deployed so as to be close to each other, the value of $m_{pattern}$ is changed according to a value obtained by again performing modulo-3 arithmetic on a PCI based on the value of $v_{shift}$. This configuration can be expressed by equation (1) below.

$$v_{shift} = N_{cell}^{ID} \bmod 6$$

$$m_{pattern} = \begin{cases} \left(N_{cell}^{ID} \bmod 18 - \left\lfloor (N_{cell}^{ID} \bmod 18)/6 \right\rfloor\right) \bmod 3 & if \quad muting \quad is \quad enabled \\ 3 & if \quad muting \quad is \quad disabled \end{cases}$$

$$\cdot \quad \cdot \quad \cdot \quad \cdot \quad \cdot \quad \cdot \quad \cdot \quad (1)$$

The muting pattern defined for each base station (cell) is not changed during the predetermined cycle (within the predetermined cycle). However, according to a first aspect of the present invention, the muting pattern defined for each base station (cell) is not changed even after the predetermined cycle. Therefore, by changing the muting pattern at every predetermined cycle, it is necessary to prevent the base stations (cells), which mute in all of the subframes allocated for transmitting the positioning reference signals during the predetermined cycle in which $m_{pattern}$ =0, from not transmitting positioning reference signals forever or for a long time.

To this end, the muting patterns may be arranged in such a manner that base station groups have the different muting patterns, respectively, after the predetermined cycle according to a value such as a System Frame Number (SFN), which defines resources on the time axis at a relative location in a communication system, or through additional signaling from a higher layer. At this time, when it is very often (about every 160 ms, 320 ms, 640 ms or 1280 ms, which is a predetermined cycle of transmitting positioning reference signals) necessary to regularly arrange the muting patterns in such a manner that base station groups have the different muting patterns, respectively, and when it is necessary to arrange the muting patterns in such a manner that base station groups have the different muting patterns, respectively, by actively scheduling on a longer cycle by using a system frame number, the muting patterns may be arranged in such a manner that the base station groups have the different muting patterns, respectively, after the predetermined cycle by using the additional signaling from the higher layer. However, in most cases, it is more appropriate to use a system frame number which does not require the additional signaling or assistance data.

With respect to equation (1) according to a first embodiment of a first aspect of the present invention, equation (2) below expresses a first embodiment of a second aspect of the present invention for arranging muting patterns in such a manner that base station groups have the different muting patterns, respectively, after the predetermined cycle by using a system frame number.

$$v_{shift} = N_{cell}^{ID} \bmod 6$$

$$m_{pattern} = \begin{cases} \left(N_{cell}^{ID} \bmod 18 - \left\lfloor (N_{cell}^{ID} \bmod 18)/6 \right\rfloor + n_f \right) \bmod 3 & if \quad muting \quad is \quad enabled \\ 3 & if \quad muting \quad is \quad disabled \end{cases}$$

$$\cdots \cdots (2)$$

With respect to equation (1) according to the first embodiment of the first aspect of the present invention, equation (3) below expresses a first embodiment of a third aspect of the present invention for arranging muting patterns in such a manner that base station groups have the different muting patterns, respectively, after the predetermined cycle by using additional signaling from the higher layer. At this time, the value of $m_{shift}$ is determined by the higher layer, and is identical for all base stations (cells).

$$v_{shift} = N_{cell}^{ID} \bmod 6$$

$$m_{pattern} = \begin{cases} \left(N_{cell}^{ID} \bmod 18 - \left\lfloor (N_{cell}^{ID} \bmod 18)/6 \right\rfloor + m_{shift} \right) \bmod 3 & if \quad muting \quad is \quad enabled \\ 3 & if \quad muting \quad is \quad disabled \end{cases}$$

$$where \quad m_{shift} \in \{0,1,2\} \quad by \quad higher \quad layer$$

$$\cdots \cdots (3)$$

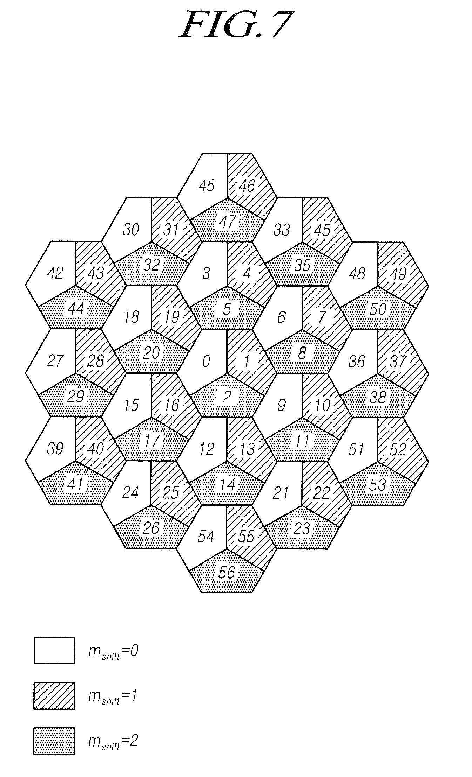

FIG. 7 is a view illustrating a second embodiment of the present invention for applying the new muting method according to the present invention as shown in FIG. 5 to the base stations, dividing each base station (cell) into three groups according to a physical cell ID, and deploying base stations (cells) according to a muting pattern. The second embodiment of the present invention differs from the first embodiment in that three cells included in a site all use an identical positioning reference signal pattern and three muting patterns are used to discriminate between the three cells. The second embodiment of the present invention is expressed by equation (4) below.

$$v_{shift} = \begin{cases} \lfloor N_{cell}^{ID}/3 \rfloor \bmod 6 & if \quad muting \quad is \quad enabled \\ N_{cell}^{ID} \bmod 6 & if \quad muting \quad is \quad disabled \end{cases}$$

$$m_{pattern} = \begin{cases} N_{cell}^{ID} \bmod 3 & if \quad muting \quad is \quad enabled \\ 3 & if \quad muting \quad is \quad disabled \end{cases}$$

$$\cdots \cdots \cdots \quad (4)$$

With respect to equation (4) according to the second embodiment of the first aspect of the present invention, equation (5) below expresses a second embodiment of a second aspect of the present invention for arranging muting patterns in such a manner that base station groups have the different muting patterns, respectively, after the predetermined cycle by using a system frame number.

$$v_{shift} = \begin{cases} \lfloor N_{cell}^{ID}/3 \rfloor \bmod 6 & if \quad muting \quad is \quad enabled \\ N_{cell}^{ID} \bmod 6 & if \quad muting \quad is \quad disabled \end{cases}$$

$$m_{pattern} = \begin{cases} (N_{cell}^{ID} + n_f) \bmod 3 & if \quad muting \quad is \quad enabled \\ 3 & if \quad muting \quad is \quad disabled \end{cases}$$

$$\cdots \cdots \cdots \quad (5)$$

With respect to equation (4) according to the second embodiment of the first aspect of the present invention, equation (6) below expresses a second embodiment of a third aspect of the present invention for arranging muting patterns in such a manner that base station groups have the different muting patterns, respectively, after the predetermined cycle by using additional signaling from the higher layer. At this time, the value of $m_{shift}$ is determined by the higher layer, and is identical for all base stations (cells).

$$v_{shift} = \begin{cases} \lfloor N_{cell}^{ID}/3 \rfloor \bmod 6 & if \quad muting \quad is \quad enabled \\ N_{cell}^{ID} \bmod 6 & if \quad muting \quad is \quad disabled \end{cases}$$

$$m_{pattern} = \begin{cases} (N_{cell}^{ID} + m_{shift}) \bmod 3 & if \quad muting \quad is \quad enabled \\ 3 & if \quad muting \quad is \quad disabled \end{cases}$$

$$where \quad m_{shift} \in \{0,1,2\} \quad by \quad higher \quad layer$$

$$\cdots \cdots \cdots \quad (6)$$

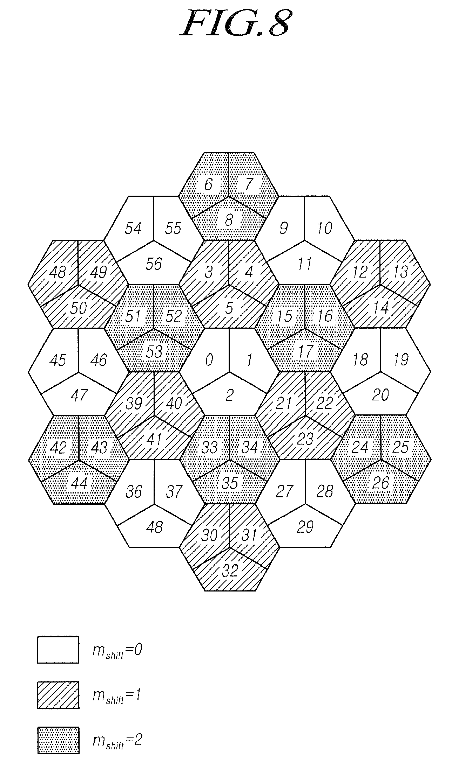

FIG. 8 is a view illustrating a third embodiment of the present invention for applying the new muting method according to the present invention as shown in FIG. 5 to the base stations, dividing each base station (cell) into three groups according to a physical cell ID, and deploying base stations (cells) according to a muting pattern. The third embodiment of the present invention differs from the first embodiment in that three cells included in a site all use an identical muting pattern, and each site including the three cells is divided into three groups and three muting patterns are used to discriminate between the three groups. The third embodiment of the present invention is expressed by equation (7) below.

$$v_{shift} = N_{cell}^{ID} \bmod 6$$

$$m_{pattern} = \begin{cases} \lfloor N_{cell}^{ID}/3 \rfloor \bmod 3 & \text{if} \quad muting \quad is \quad enabled \\ 3 & \text{if} \quad muting \quad is \quad disabled \end{cases}$$

$$\cdots \cdots (7)$$

With respect to equation (7) according to the third embodiment of the first aspect of the present invention, equation (8) below expresses a third embodiment of a second aspect of the present invention for arranging muting patterns in such a manner that base station groups have the different muting patterns, respectively, after the predetermined cycle by using a system frame number.

$$v_{shift} = N_{cell}^{ID} \bmod 6$$

$$m_{pattern} = \begin{cases} \left( \lfloor N_{cell}^{ID}/3 \rfloor + n_f \right) \bmod 3 & \text{if} \quad muting \quad is \quad enabled \\ 3 & \text{if} \quad muting \quad is \quad disabled \end{cases}$$

$$\cdots \cdots (8)$$

With respect to equation (7) according to the third embodiment of the first aspect of the present invention, equation (9) below expresses a third embodiment of a third aspect of the present invention for arranging muting patterns in such a manner that base station groups have the different muting patterns, respectively, after the predetermined cycle by using additional signaling from the higher layer. At this time, the value of $m_{shift}$ is determined by the higher layer, and is identical for all base stations (cells).

$$v_{shift} = N_{cell}^{ID} \bmod 6$$

$$m_{pattern} = \begin{cases} \left( \lfloor N_{cell}^{ID}/3 \rfloor + m_{shift} \right) \bmod 3 & \text{if} \quad muting \quad is \quad enabled \\ 3 & \text{if} \quad muting \quad is \quad disabled \end{cases}$$

$$where \quad m_{shift} \in \{0,1,2\} \quad by \quad higher \quad layer$$

$$\cdots \cdots (9)$$

Embodiments of the present invention for dividing each base station (cell) into three groups according to a physical cell ID and deploying base stations (cells) according to a muting pattern, are not limited to the configurations shown in FIGs. 6 to 8, and may be more variously constructed on the following principles.

1. Different muting patterns are used to further discriminate between as many base stations (cells) all having an identical Positioning Reference Signal (PRS) pattern as possible, i.e. as many base stations (cells) all having an identical value of $v_{shift}$ as possible.

2. Base stations (cells) having $m_{pattern} = 0$, which mute all of the subframes allocated for transmitting the positioning reference signals during the predetermined cycle, are deployed in such a manner as to prevent, to a maximum, the base stations (cells) from being deployed so as to be close to each other.

When the base stations (cells) are constructed on the principles as described above, it is possible to acquire more accurate positioning information together with the minimization of interference between the base stations (cells) all having an identical positioning reference signal pattern and an identical muting pattern. Particularly, when a muting pattern is defined for each base station (cell) according to a physical cell ID as in the embodiments of the present invention as described above, a muting pattern of each base station may be recognized by using physical cell IDs of a serving cell and a neighbor cell when the user equipment performs demodulation. Therefore, there is no need for additional assistance data which must be transmitted to the user equipment in a forward direction through L2 signaling such as an RRC.

In an environment where base stations (cells) are randomly deployed as described above, it goes without saying that there may occur the worst case, such as a case where the base stations, which mute all of the subframes allocated for transmitting positioning reference signals during the predetermined cycle, are deployed so as to be close to each other. In this case, the higher layer needs to allocate a muting pattern to each base station (cell) in consideration of the random deployment of base stations (cells) in addition to a Physical Cell (or base station) ID (PCI), without completely following the physical cell ID. Equation (10) below expresses another embodiment of the present invention in this case.

$$v_{shift} = N_{cell}^{ID} \bmod 6$$

$$m_{pattern} = \begin{cases} f(N_{cell}^{ID}, m_{shift}) & if \quad muting \quad is \quad enabled \\ 3 & if \quad muting \quad is \quad disabled \end{cases}$$

$$where \quad m_{shift} \in \{0,1,2\} \quad by \quad higher \quad layer$$

$$\cdot \quad \cdot \quad \cdot \quad \cdot \quad \cdot \quad \cdot \quad (10)$$

At this time, the value of $m_{shift}$ is determined by the higher layer, and base stations (cells) may have different $m_{shift}$ values, respectively (cell-specific).   $f(N_{cell}^{ID}, m_{shift})$ which is a function of a PCI $N_{cell}^{ID}$   and $m_{shift}$, for example, is defined by equation (11) below.

$$f(N_{cell}^{ID}, m_{shift}) = \left(N_{cell}^{ID} + m_{shift}\right) \bmod 3 \quad or \quad \left(\lfloor N_{cell}^{ID}/3\rfloor + m_{shift}\right) \bmod 3$$

$$\cdot \quad \cdot \quad \cdot \quad \cdot \quad \cdot \quad \cdot \quad (11)$$

At this time, it is necessary to transmit the value of $m_{shift}$ of each base station as additional assistance data to each user equipment. However, although this additional assistance data is used, there is an advantage in that the length of assistance data is reduced to only 2 bits whereas the length of assistance data is equal to $\lceil \log_2, M \rceil$ in the existing muting patterns. For example, when the number of the subframes allocated for transmitting the positioning reference signals during the predetermined cycle is equal to 6, in the existing muting methods, the length of additional assistance data is 5 bits. In contrast, in the above case, only 2 bits are required as the length of additional assistance data. This additional assistance data is transmitted to each of all of the user equipments and to each of all neighbor cells of each user equipment. Therefore, there is a significant reduction in overhead caused by a reduction in the number of bits.

The method and the apparatus for transmitting a positioning reference signal proposed in the present invention can be applied to all OFDM-based wireless mobile communication systems. Examples of the OFDM-based wireless mobile communication systems include E-UTRAN (LTE), E-EUTRAN (LTE-Advanced), WIBRO, Mobile Wi—MAX, etc. In addition, it goes without saying that the method and the apparatus for transmitting a positioning reference signal can be applied to all wireless mobile communication systems which require positioning for measuring the location of a user equipment in all OFDM-based wireless mobile communication terminals.

Although exemplary embodiments of the present invention have been described with reference to the accompanying drawings, the present invention is not limited to the exemplary embodiments. For example, the above embodiments of the present invention have described a positioning reference signal as an example of a reference signal, but the idea of the present invention may also be applied to another reference signal, for example, a Channel State Information-Reference Signal (CSI-RS).

Meanwhile, the above embodiments of the present invention have described a method for transmitting a signal and a base station corresponding to an apparatus for transmitting a signal in a communication system. However, the user equipment may equally receive a signal transmitted by the above method for transmitting a signal in the communication system. Namely, in the above embodiments of the present invention, in the communication system, a method for receiving a signal may be performed so as to be matched with the method for transmitting a signal, and an apparatus for receiving a signal may be implemented so as to be matched with the apparatus for transmitting a signal.

For example, in transmitting reference signals in at least one subframe during a predetermined cycle in a communication system including two or more base stations and at least one user equipment, at least one of the base stations may mute all of the subframes allocated for transmitting the reference signals during the predetermined cycle without transmitting reference signals therein, the remaining base stations of the base stations may be divided into multiple groups, and reference signals may be transmitted in a subframe specified for each group and a signal, which is muted without transmitting reference signals in the remaining subframes, may be received, on a subframe-by-subframe basis in all of the subframes allocated for transmitting the reference signals during the predetermined cycle.

Meanwhile, in a communication system including two or more base stations and at least one user equipment, a signal, which is muted without transmitting reference signals in all of the N subframes allocated for transmitting the reference signals during the predetermined cycle, may be received from at least one of the base stations, a signal, which is muted without transmitting reference signals in an odd-numbered subframe among the N subframes allocated for transmitting the reference signals during the predetermined cycle, may be received from at least another of the base stations, and a signal, which is muted without transmitting reference signals in an even-numbered subframe among the N subframes allocated for transmitting the reference signals during the predetermined cycle, may be received from at least still another of the base stations.

Also, in a communication system including two or more base stations and at least one user equipment, in receiving reference signals in at least one subframe during the predetermined cycle, the base stations (cells) may have different positioning reference signal patterns, respectively, according to $v_{shift}$, the value of which is obtained by performing modulo-6 arithmetic on a Physical Cell (or base station) ID (PCI) of a relevant base station, and three different muting patterns enable a further discrimination between base stations (cells) all having an identical value of $v_{shift}$.

Also, in a communication system including two or more base stations and at least one user equipment, in receiving reference signals in at least one subframe during the predetermined cycle, the three base stations included in a site may all have an identical reference signal pattern, and three different muting patterns may be used to discriminate between reference signals of three base stations included in each of the sites.

Also, in a communication system including two or more base stations and at least one user equipment, in receiving reference signals in at least one subframe during the predetermined cycle, reference signals of the three base stations included in a site may all have an identical muting pattern, and each site including the three base stations may be divided into three groups and three different muting patterns may be used to discriminate between the three groups.

At this time, the muting patterns may be arranged in such a manner that base stations have the different muting patterns, respectively, after the predetermined cycle by using a System Frame Number (SFN). Also, the muting patterns may be arranged in such a manner that base stations have the different muting patterns, respectively, after the predetermined cycle by using the additional signaling from the higher layer.

Although it has been described in the above that all the components of an embodiment of the present invention are coupled as a single unit or coupled to be operated as a single unit, the present invention is not necessarily limited to such an embodiment. Namely, within the purpose of the present invention, one or more components among the components may be selectively coupled to be operated as one or more units. Also, although each of the components may be implemented as an independent hardware, some or all of the components may be selectively combined with each other, so that they may be implemented as a computer program having one or more program modules for performing some or all of the functions combined in one or more hardwares. Codes and code segments forming the computer program can be easily conceived by an ordinarily skilled person in the technical field of the present invention. Such a computer program may implement the embodiments of the present invention by being stored in a computer-readable medium, and being read and executed by the computer. Storage mediums for storing the computer program may include a magnetic recording medium, an optical recording medium, a carrier wave medium, etc.

In addition, since terms, such as "including," "comprising," and "having" mean that one or more corresponding components may exist unless they are specifically described to the contrary, it shall be construed that one or more other components can be further included. All of the terminologies including one or more technical or scientific terminologies have the same meanings that those having ordinary knowledge in the technical field of the present invention understand ordinarily unless they are defined otherwise. A term ordinarily used like that defined by a dictionary shall be construed that it has a meaning equal to that in the context of a related description, and shall not be construed in an ideal or excessively formal meaning unless it is clearly defined in the present specification.

Although exemplary embodiments of the present invention have been described for illustrative purposes, those having ordinary knowledge in the technical field of the present invention will appreciate that various modifications, additions and substitutions are possible, without departing from the scope and spirit of the invention as disclosed in the accompanying claims. Therefore, the embodiments disclosed in the present invention are intended to illustrate the scope of the technical idea of the present invention, and the scope of the technical idea of the present invention is not limited by the embodiments. The protection scope of the present invention should be construed based on the accompanying claims, and it should be construed that all of the technical ideas included within the scope equivalent to the claims are included within the right scope of the present invention.

**CROSS-REFERENCE TO RELATED APPLICATION**

This application claims priority from and the benefit under 35 U.S.C. §119(a) of Korean Patent Application No. 10-2009-0085116, filed on September 9, 2009, which is hereby incorporated by reference for all purposes as if fully set forth herein. In addition, this application claims priority in countries, other than the U.S., with the same reason based on the Korean Patent Application, which is hereby incorporated by reference for all purposes as if fully set forth herein.

**Claims**

1.   A method for transmitting a signal in a communication system comprising two or more base stations and at least one user equipment, the method comprising:

in transmitting reference signals in at least one subframe during a predetermined cycle, muting, by at least one of the base stations, all subframes allocated for transmitting reference signals during the predetermined cycle without transmitting reference signals therein; and

dividing remaining base stations of the base stations into multiple groups, and transmitting reference signals in a subframe specified for each group and muting remaining subframes without transmitting reference signals in the remaining subframes, by the remaining base stations of the base stations, on a subframe-by-subframe basis in all of the subframes allocated for transmitting the reference signals during the predetermined cycle.

2.   A method for transmitting a signal in a communication system comprising two or more base stations and at least one user equipment, the method comprising:

muting, by at least one of the base stations, all N subframes allocated for transmitting reference signals during a predetermined cycle without transmitting reference signals therein;

muting, by at least another of the base stations, an odd-numbered subframe among the N subframes allocated for transmitting the reference signals during the predetermined cycle without transmitting reference signals therein; and

muting, by at least still another of the base stations, an even-numbered subframe among the N subframes allocated for transmitting the reference signals during the predetermined cycle without transmitting reference signals therein.

3.   A method for transmitting a signal in a communication system comprising two or more base stations and at least one user equipment, the method comprising:

in transmitting reference signals in at least one subframe during a predetermined cycle, having, by the base stations (cells), different positioning reference signal patterns, respectively, according to a value obtained by performing modulo-6 arithmetic on a Physical Cell (or base station) ID (PCI) of a relevant base station; and further discriminating between base stations (cells) all having an identical value by using three different muting patterns.

4.   A method for transmitting a signal in a communication system comprising two or more base stations and at least one user equipment, the method comprising:

in transmitting reference signals in at least one subframe during a predetermined cycle, having an identical reference signal pattern by the three base stations included in a site; and

discriminating between reference signals of three base stations included in each site by using three different muting patterns.

5. A method for transmitting a signal in a communication system comprising two or more base stations and at least one user equipment, the method comprising:

in transmitting reference signals in at least one subframe during a predetermined cycle, having reference signals having an identical muting pattern by the three base stations included in a site; and

dividing each site comprising the three base stations into three groups, and discriminating between the three groups by using three different muting patterns.

6. The method as claimed in any of claims 3 to 5, wherein the muting patterns are arranged in such a manner that the base stations have the different muting patterns, respectively, after the predetermined cycle by using a System Frame Number (SFN).

7. The method as claimed in any of claims 3 to 5, wherein the muting patterns are arranged in such a manner that the base stations have the different muting patterns, respectively, after the predetermined cycle by using additional signaling from a higher layer.

8. The method as claimed in any of claims 1 to 5, wherein the reference signal corresponds to a positioning reference signal.

9. An apparatus for transmitting a signal in a communication system comprising two or more base stations and at least one user equipment, the apparatus comprising:

in transmitting reference signals in at least one subframe during a predetermined cycle, at least one of the base stations for muting all subframes allocated for transmitting reference signals during the predetermined cycle without transmitting reference signals therein; and

remaining base stations of the base stations, which are divided into multiple groups, for transmitting reference signals in a subframe specified for each group and muting remaining subframes without transmitting reference signals in the remaining subframes, on a subframe-by-subframe basis in all of the subframes allocated for transmitting the reference signals during the predetermined cycle.

10. An apparatus for transmitting a signal in a communication system comprising two or more base stations and at least one user equipment, the apparatus comprising:

at least one of the base stations for muting all N subframes allocated for transmitting reference signals during a predetermined cycle without transmitting reference signals therein;

at least another of the base stations for muting an odd-numbered subframe among the N subframes allocated for transmitting the reference signals during the predetermined cycle without transmitting reference signals therein; and

at least still another of the base stations for muting an even-numbered subframe among the N subframes allocated for transmitting the reference signals during the predetermined cycle without transmitting reference signals therein.

11. An apparatus for transmitting a signal in a communication system comprising two or more base stations and at least one user equipment, the apparatus comprising:

in transmitting reference signals in at least one subframe during a predetermined cycle, the base stations (cells) having different positioning reference signal patterns, respectively, according to a value obtained by performing modulo-6 arithmetic on a Physical Cell (or base station) ID (PCI) of a relevant base station,

wherein three different muting patterns are used to further discriminate between base stations (cells) all having an identical value.

12. An apparatus for transmitting a signal in a communication system comprising two or more base stations and at least one user equipment, the apparatus comprising:

in transmitting reference signals in at least one subframe during a predetermined cycle, the three base stations included in a site, having an identical reference signal pattern,
wherein three different muting patterns are used to discriminate between reference signals of three base stations included in each site.

13. An apparatus for transmitting a signal in a communication system comprising two or more base stations and at least one user equipment, the apparatus comprising:

in transmitting reference signals in at least one subframe during a predetermined cycle, the three base stations included in a site, having reference signals all having an identical muting pattern; and
each site comprising the three base stations, which is divided into three groups, between which a discrimination is made by using three different muting patterns.

14. The apparatus as claimed in any of claims 11 to 13, wherein the muting patterns are arranged in such a manner that the base stations have the different muting patterns, respectively, after the predetermined cycle by using a System Frame Number (SFN).

15. The apparatus as claimed in any of claims 11 to 13, wherein the muting patterns are arranged in such a manner that the base stations have the different muting patterns, respectively, after the predetermined cycle by using additional signaling from a higher layer.

16. The apparatus as claimed in any of claims 9 to 13, wherein the apparatus for transmitting the signal corresponds to the base station.

17. The apparatus as claimed in any of claims 9 to 13, wherein the reference signal corresponds to a positioning reference signal

18. A method for receiving a signal in a communication system comprising two or more base stations and at least one user equipment, the method comprising:

in receiving reference signals in at least one subframe during a predetermined cycle, receiving, from at least one of the base stations, a signal muted in all subframes allocated for transmitting reference signals during the predetermined cycle without transmitting reference signals therein; and receiving, from remaining base stations of the base stations, which are divided into multiple groups, reference signals transmitted in a subframe specified for each group and a signal muted in remaining subframes without transmitting reference signals in the remaining subframes, on a subframe-by-subframe basis in all of the subframes allocated for transmitting the reference signals during the predetermined cycle.

19. A method for receiving a signal in a communication system comprising two or more base stations and at least one user equipment, the method comprising:

receiving, from at least one of the base stations, a signal muted in all N subframes allocated for transmitting reference signals during a predetermined cycle without transmitting reference signals therein;
receiving, from at least another of the base stations, a signal muted in an odd-numbered subframe among the N subframes allocated for transmitting the reference signals during the predetermined cycle without transmitting reference signals therein; and
receiving, from at least still another of the base stations, a signal muted in an even-numbered subframe among the N subframes allocated for transmitting the reference signals during the predetermined cycle without transmitting reference signals therein.

20. A method for receiving a signal in a communication system comprising two or more base stations and at least one user equipment, the method comprising:

in receiving reference signals in at least one subframe during a predetermined cycle, having, by the base stations (cells), different positioning reference signal patterns, respectively, according to a value obtained by performing modulo-6 arithmetic on a Physical Cell (or base station) ID (PCI) of a relevant base station; and
further discriminating between base stations (cells) all having an identical value by using three different muting patterns.

21. A method for receiving a signal in a communication system comprising two or more base stations and at least one user equipment, the method comprising:

in receiving reference signals in at least one subframe during a predetermined cycle, having an identical reference signal pattern by the three base stations included in a site; and
discriminating between reference signals of three base stations included in each site by using three different muting patterns.

22. A method for receiving a signal in a communication system comprising two or more base stations and at least one user equipment, the method comprising:

in receiving reference signals in at least one subframe during a predetermined cycle, having reference signals having an identical muting pattern by the three base stations included in a site; and
dividing each site comprising the three base stations into three groups, and discriminating between the three groups by using three different muting patterns.

23. The method as claimed in any of claims 20 to 22, wherein the muting patterns are arranged in such a manner that the base stations have the different muting patterns, respectively, after the predetermined cycle by using a System Frame Number (SFN).

24. The method as claimed in any of claims 20 to 22, wherein the muting patterns are arranged in such a manner that the base stations have the different muting patterns, respectively, after the predetermined cycle by using additional signaling from a higher layer.

25. The method as claimed in any of claims 18 to 22, wherein the reference signal corresponds to a positioning reference signal.

26. An apparatus for receiving a signal in a communication system comprising two or more base stations and at least one user equipment, the apparatus comprising:

in receiving reference signals in at least one subframe during a predetermined cycle, receiving, from at least one of the base stations, a signal muted in all subframes allocated for transmitting reference signals during the predetermined cycle without transmitting reference signals therein; and
receiving, from remaining base stations of the base stations, which are divided into multiple groups, reference signals transmitted in a subframe specified for each group and a signal muted in remaining subframes without transmitting reference signals in the remaining subframes, on a subframe-by-subframe basis in all of the subframes allocated for transmitting the reference signals during the predetermined cycle.

27. An apparatus for receiving a signal in a communication system comprising two or more base stations and at least one user equipment, the apparatus comprising:

receiving, from at least one of the base stations, a signal muted in all N subframes allocated for transmitting reference signals during a predetermined cycle without transmitting reference signals therein;
receiving, from at least another of the base stations, a signal muted in an odd-numbered subframe among the N subframes allocated for transmitting the reference signals during the predetermined cycle without transmitting reference signals therein; and
receiving, from at least still another of the base stations, a signal muted in an even-numbered subframe among the N subframes allocated for transmitting the reference signals during the predetermined cycle without transmitting reference signals therein.

28. An apparatus for receiving a signal in a communication system comprising two or more base stations and at least one user equipment, the apparatus comprising:

in receiving reference signals in at least one subframe during a predetermined cycle, having, by the base stations (cells), different positioning reference signal patterns, respectively, according to a value obtained by performing modulo-6 arithmetic on a Physical Cell (or base station) ID (PCI) of a relevant base station,
wherein three different muting patterns are used to further discriminate between base stations (cells) all having an identical value.

**29.** An apparatus for receiving a signal in a communication system comprising two or more base stations and at least one user equipment, the apparatus comprising:

in receiving reference signals in at least one subframe during a predetermined cycle, having an identical reference signal pattern by the three base stations included in a site, wherein three different muting patterns are used to discriminate between reference signals of three base stations included in each site.

**30.** An apparatus for receiving a signal in a communication system comprising two or more base stations and at least one user equipment, the apparatus comprising:

in receiving reference signals in at least one subframe during a predetermined cycle, having reference signals having an identical muting pattern by the three base stations included in a site; and dividing each site comprising the three base stations into three groups, and discriminating between the three groups by using three different muting patterns.

**31.** The apparatus as claimed in any of claims 28 to 30, wherein the muting patterns are arranged in such a manner that the base stations have the different muting patterns, respectively, after the predetermined cycle by using a System Frame Number (SFN).

**32.** The apparatus as claimed in any of claims 28 to 30, wherein the muting patterns are arranged in such a manner that the base stations have the different muting patterns, respectively, after the predetermined cycle by using additional signaling from a higher layer.

**33.** The apparatus as claimed in any of claims 26 to 30, wherein the apparatus for receiving the signal corresponds to the user equipment.

**34.** The apparatus as claimed in any of claims 26 to 30, wherein the reference signal corresponds to a positioning reference signal.

*FIG.1*

**CONTROL REGION** PRS CRS NON-AVAILABLE VERTICAL (COLUMN) AXES FOR PRS

TIME FREQUENCY

<NORMAL SUBFRAME WITH NORMAL CP>   <NORMAL SUBFRAME WITH EXTENDED CP>

: CRS   : CONTROL REGION   : PRS   : NON-AVAILABLE VERTICAL (COLUMN) AXES FOR PRS

## FIG.2

|  | SUBFRAME 0 | SUBFRAME 1 | SUBFRAME 2 | • • • | SUBFRAME N-1 |
|---|---|---|---|---|---|
| M_PATTERN=0 | TRANSMIT | TRANSMIT | MUTE | • • • | MUTE |
| M_PATTERN=1 | TRANSMIT | MUTE | TRANSMIT | • • • | MUTE |
| M_PATTERN=2 | TRANSMIT | MUTE | MUTE | • • • | TRANSMIT |
| ⋮ |  |  |  |  |  |
| M_PATTERN=M-1 | MUTE | MUTE | TRANSMIT | • • • | TRANSMIT |

EP 2 477 349 A2

# FIG.3

|  | SUBFRAME 0 | SUBFRAME 1 | SUBFRAME 2 |
|---|---|---|---|
| M_PATTERN=0 | TRANSMIT | MUTE | MUTE |
| M_PATTERN=1 | MUTE | TRANSMIT | MUTE |
| M_PATTERN=2 | MUTE | MUTE | TRANSMIT |

<N=3, K=1 : M=3>

|  | SUBFRAME 0 | SUBFRAME 1 | SUBFRAME 2 | SUBFRAME 3 |
|---|---|---|---|---|
| M_PATTERN=0 | TRANSMIT | TRANSMIT | MUTE | MUTE |
| M_PATTERN=1 | TRANSMIT | MUTE | TRANSMIT | MUTE |
| M_PATTERN=2 | TRANSMIT | MUTE | MUTE | TRANSMIT |
| M_PATTERN=3 | MUTE | TRANSMIT | TRANSMIT | MUTE |
| M_PATTERN=4 | MUTE | TRANSMIT | MUTE | TRANSMIT |
| M_PATTERN=5 | MUTE | MUTE | TRANSMIT | TRANSMIT |

<N=4, K=2 : M=6>

# FIG.4

|  | SUBFRAME 0 | SUBFRAME 1 | SUBFRAME 2 | ... | SUBFRAME N−1 |
|---|---|---|---|---|---|
| M_PATTERN=0 | MUTE | MUTE | MUTE | ... | MUTE |
| ⋮ |  |  |  |  |  |
| M_PATTERN=M'_1 | MUTE | MUTE | MUTE | ... | MUTE |
| M_PATTERN=M' | TRANSMIT | TRANSMIT | MUTE | ... | MUTE |
| M_PATTERN=M'+1 | TRANSMIT | MUTE | TRANSMIT | ... | MUTE |
| M_PATTERN=M'+2 | TRANSMIT | MUTE | MUTE | ... | TRANSMIT |
| ⋮ |  |  |  |  |  |
| M_PATTERN=M−1 | MUTE | MUTE | TRANSMIT | ... | TRANSMIT |

EP 2 477 349 A2

# FIG.5

|  | EVEN SUBFRAME | ODD SUBFRAME |
|---|---|---|
| M_PATTERN=0 | MUTE | MUTE |
| M_PATTERN=1 | TRANSMIT | MUTE |
| M_PATTERN=2 | MUTE | TRANSMIT |
| M_PATTERN=3 | TRANSMIT | TRANSMIT |

<GENERAL CASE>

|  | SUBFRAME 0 | SUBFRAME 1 | SUBFRAME 2 | SUBFRAME 3 | SUBFRAME 4 | SUBFRAME 5 |
|---|---|---|---|---|---|---|
| M_PATTERN=0 | MUTE | MUTE | MUTE | MUTE | MUTE | MUTE |
| M_PATTERN=1 | TRANSMIT | MUTE | TRANSMIT | MUTE | TRANSMIT | MUTE |
| M_PATTERN=2 | MUTE | TRANSMIT | MUTE | TRANSMIT | MUTE | TRANSMIT |

<N=2 OR 4 OR 6>

# FIG.6

$m_{shift}=0$

$m_{shift}=1$

$m_{shift}=2$

# FIG. 7

$m_{shift}=0$

$m_{shift}=1$

$m_{shift}=2$

# FIG.8

$m_{shift}=0$

$m_{shift}=1$

$m_{shift}=2$

## REFERENCES CITED IN THE DESCRIPTION

**Patent documents cited in the description**

- KR 1020090085116